Europäisches Patentamt

European Patent Office

Office européen des brevets

(19)

(11) Publication number: **0 377 974**
**A2**

# EUROPEAN PATENT APPLICATION

(12)

(21) Application number: **89313026.0**

(22) Date of filing: **13.12.89**

(51) Int. Cl.⁵: **G01N 27/22, G01F 22/00**

(30) Priority: **12.01.89 GB 8900671**

(43) Date of publication of application:
**18.07.90 Bulletin 90/29**

(84) Designated Contracting States:
**DE FR SE**

(71) Applicant: **SINAR AGRITEC LIMITED**
**9 Waterside Hamm Moor Lane**
**Weybridge Surrey KT15 2SN(GB)**

(72) Inventor: **van der Matten, Michael**
**13 Alderside Walk Englefield Green**
**Egham Surrey(GB)**

(74) Representative: **Nash, Keith Wilfrid et al**
**KEITH W. NASH & Co. Pearl Assurance**
**House 90-92 Regent Street**
**Cambridge CB2 1DP(GB)**

(54) **Measurement and/or analysis of a variable volume sample.**

(57) Apparatus for moisture analysis in which a sample cell (10) containing sensors for moisture content, temperature and weight is supplied with a sample the volume of which has previously been measured in a container (20) of known configuration containing electrodes (30, 32, 34) which measure the height of the sample in the container and compute its volume by a processing means.

EP 0 377 974 A2

## Measurement and/or Analysis of a Variable Volume Sample

### Field of the invention

This invention relates to the measurement and/or analysis of a variable volume sample. The sample may be any kind of particulate product, such as cereals, pulses, oilseeds, coffee and tea, by way of example only.

### Background to the invention

Various portable instruments are known for measurement of the moisture content of product samples, commonly using capacitance-type sensors. Such instruments generally also include weight and temperature sensors which are used to correct the moisture-content or dielectric measurement in respect of the weight and temperature of the sample. Such instruments can usually be calibrated either in the factory of manufacture or by the user via a keyboard. Commonly, the product sample is filled into and emptied from a measurement cell manually, but it is also known to include automatic filling and emptying mechanisms in the instrument.

The instruments are also usually capable of measuring the bulk density or specific weight of the sample. This can be achieved by overfilling a sample cell of known volume and striking off any excess so that a known volume of the product can be weighed.

However, in general it would be advantageous if sample testing was not restricted to a sample of fixed, known volume and it is a principal object of this invention to provide apparatus for measurement and/or analysis of a sample which is not so restricted.

### The invention

According to one aspect of the invention, there is provided apparatus for moisture analysis of a sample of a particulate product, comprising means for loading a sample cell with the product sample, sensor means of the capacitance type for sensing the moisture content of the sample product in the cell, together with means for sensing the temperature and the weight of the product sample in the cell, means for measuring the volume of the product sample loaded into the sample cell, and processing means for computing at least the moisture content and the bulk density of the product sample.

The apparatus preferably also includes means for automatic loading and emptying of the sample cell, and the volume of the product sample may be sensed prior to loading the cell.

The processing means preferably comprises a microprocessor including a keyboard by which the sensors can be calibrated, as by the entry of calibration curves for products of various types. Alternatively, such calibration curves may be entered, e.g. from another instrument, via an RS232 port or the equivalent, either directly or through a modem.

Alphanumeric display means is preferably provided to display computed measurements and possibly also to assist the user with prompts during usage of the apparatus, which may also include a printer.

A preferred means for volume measurement is a means for sensing the height of product in a container of known configuration or cross-sectional size. This container may be loaded and sensed before transferring the sensed volume of product into the sample cell, preferably by the automatic loading means. While the height of the product in the container may be sensed mechanically, optically or acoustically, a preferred sensor is, like the moisture content sensor, of the capacitance type.

Thus, according to another aspect of the invention, there is provided apparatus for measuring the volume of a product sample, comprising a container of known cross-sectional shape along a vertical axis, a capacitance-type sensor means in the container comprising at least an earth electrode, a measuring electrode and a reference electrode, and computing means for utilising output signals taken from said electrodes to compute the height of a product sample in the container independently of the dielectric constant of said sample.

The apparatus in accordance with this aspect of the invention is not restricted to the sensing of powdered, granular or other particulate products, but may also be applied to measurement of the volume of a liquid or semi-liquid sample.

The computing means may act to calculate the height of the product sample in the container by use of an algebraic relationship, such as the ratio of (ME-EE) to (RE-EE) where ME, EE and RE respectively represent the magnitudes of the output signals obtained from the measurement, earth and reference electrodes.

In the case of a particulate product, it is possible that the top surface of the product sample in the container may not be level or flat and, in order nevertheless to achieve an accurate volume measurement, the sensor means may comprise a multiplicity of measurement, earth and reference electrodes extending in sequence around the entire internal periphery of the container.

A preferred container is of cylindrical shape, with a multiplicity of electrodes distributed regularly around its circumference.

Advantageously, the above two aspects of the invention are used in combination. Thus, according to a third aspect of the invention, there is provided apparatus for moisture analysis of a sample of a particulate product, comprising a container of known configuration, means for feeding the product into the container to provide a product sample of initially unknown volume, capacitance-type sensor means for sensing the height of the product sample which has been fed into the container, a sample cell having associated moisture content, temperature and weight sensors, means for transferring the height-sensed volume of product sample from the container into the sample cell, and microprocessor means for computing at least the moisture content and bulk density of the product sample, utilising the outputs of the height sensor means at the container and the sensors associated with the sample cell.

The means for feeding the product into the container preferably comprises a valve controlled hopper of internal volume smaller than that of the container.

Description of drawings

Apparatus in accordance with the invention is schematically illustrated by way of example in the accompanying drawings, in which:-

Figure 1 is a schematic view of an embodiment of moisture analysis apparatus;

Figure 2 is a side view of an electrode arrangement for height measurement of a product sample in a container; and

Figure 3 is a developed view of a cylindrical container having a preferred electrode arrangement.

Description of embodiment

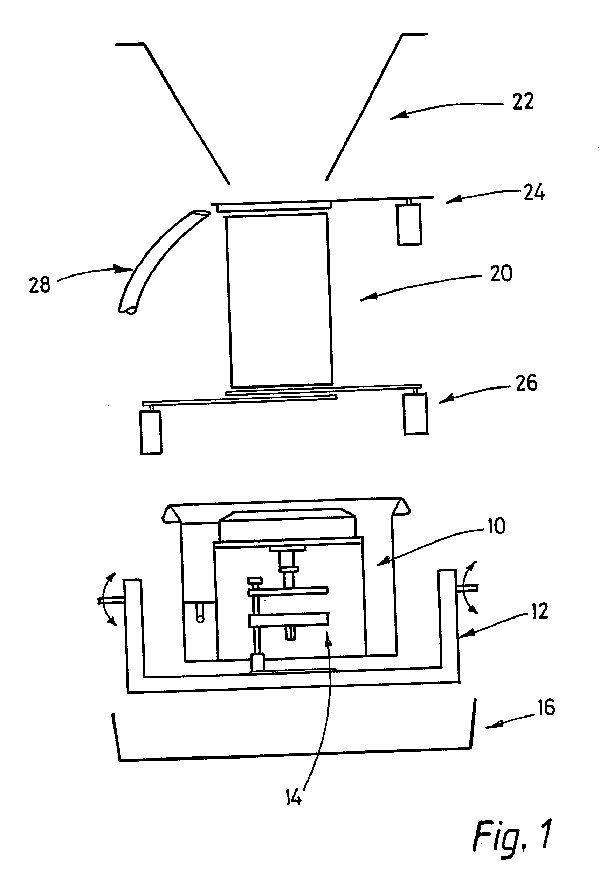

The apparatus illustrated in Figure 1 is a desktop moisture content analyser, especially intended for determination of the moisture content of a sample of a particulate product such as cereals, pulses, oilseeds, coffee and tea and the like.

Generally in accordance with conventional apparatus, the apparatus includes a cell 10 for receiving the sample to be analysed. The sample cell is mounted on a weight balance in a cradle 12 mounted for rotation. Capacitance and temperature sensors 14 are provided in the cell. The capacitance sensor determines moisture content by measuring the dielectric constant of the sample. A tested sample is discharged into a tray 16 for removal.

Not shown parts of the apparatus include a microprocessor having a keyboard for input of information enabling calibration, and having an RS232 port for alternative entry of such information, for example via a modem. An alphanumeric display and a printer are also provided.

In conventional apparatus, the sample cell is filled to ensure testing of a sample of fixed volume or weight. The present invention is especially concerned with means by which a sample of a variable size and weight can be tested.

For this purpose, the apparatus is provided with a cylindrical container 20 above the sample cell, which container 20 can be loaded with a sample from a hopper 22 of smaller internal volume than the container. Loading is automatic by means of a hopper valve and motor 24. Likewise, emptying from the container 20 into the sample cell 10 is automatic by means of cylinder valves and motor 26. In the event of inadvertent overfilling of the hopper 22, the operating valve is able to remove excess product via a waste pipe 28.

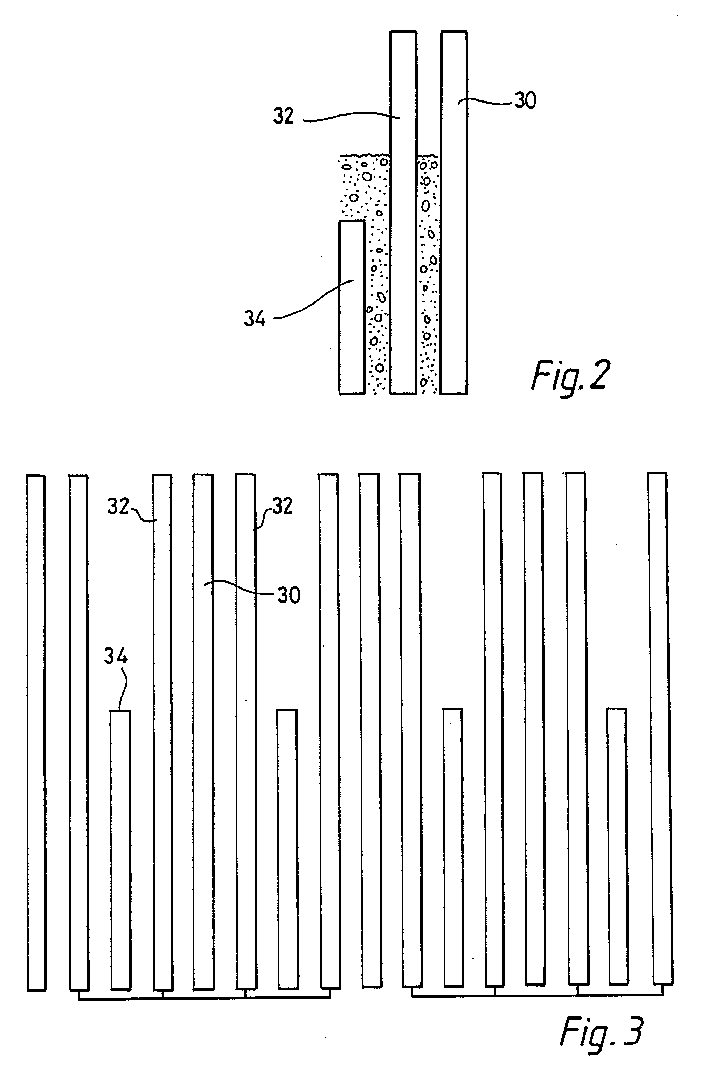

As shown in Figure 2, the container is equipped with a capacitance sensor in the form of three upstanding electrodes which in combination serve to determine the height of sample loaded into the container from the hopper. This sensor comprises a measurement electrode 30, an earth electrode 32 and a reference electrode 34 (ME, EE and RE).

Capacitance between pairs of the electrodes increases with increasing height of the sample in the container. The reference electrode is provided to take into account the fact that the capacitance value also increases with moisture content. Thus, the true height of the sample independent of moisture content effects can be determined as an algebraic function of the three signal values obtained from the respective electrodes, for example the ratio of signals ME-EE to RE-EE. The height is determinable when the sample is higher than the top of the reference electrode. In the example of drawing 2 and 3 the reference electrode is 50% of the length of the measurement electrode but this can be lower or higher. Given that the internal cross-sectional area of the cylindrical container is also known, the volume of the sample in the container, which sample is then delivered into the sample cell, can also readily be determined in the microprocessor and displayed and/or printed.

At the sample cell, measurement of the weight of the sample enables the bulk density of the product to be calculated and displayed and/or printed in the usual way, but without the pre-requirement for a sample of fixed volume.

The simple electrode arrangement shown in Figure 2 may give rise to error if the product is not free flowing, due to a non-level surface at the top of the sample in the container. This problem is overcome by means of the electrode array shown in Figure 3, wherein the container is provided with a regular sequence of measurement, earth and reference electrodes around its entire inside periphery. The capacitance signals obtained from the multiplicity of each type of electrode are averaged before height determination, or a plurality of height determinations are averaged.

The volume measurement apparatus shown in Figures 2 and 3 can be used, outside the apparatus of Figure 1, for determination of the volume of any flowable product, substance or material, including liquids. On the other hand, in the apparatus of Figure 1, it is possible to replace the capacitance-type height measurement sensor by mechanical, acoustic or optical means enabling height measurement of the sample in the container.

Various other modifications of the above-described and illustrated apparatus are also possible within the scope of the invention hereinbefore defined.

**Claims**

1. Apparatus for moisture analysis of a sample of a particulate product, comprising means for loading a sample cell with the product sample, sensor means of the capacitance type for sensing the moisture content of the sample product in the cell, together with means for sensing the temperature and the weight of the product sample in the cell, characterised by means (20) for measuring the volume of the product sample loaded into the sample cell, and processing means for computing at least the moisture content and the bulk density of the product sample.

2. Apparatus according to claim 1, characterised in that the means for volume measurement is a means (30, 32, 34) for sensing the height of product in a container (20) of known configuration or cross-sectional size.

3. Apparatus according to claim 2, characterised in that the container is loaded and sensed before transferring the sensed volume of product into the sample cell by an automatic loading means (24, 26).

4. Apparatus according to claim 2 or claim 3, characterised in that the height of the product in the container is sensed by a capacitance type sensor.

5. A device for measuring the volume of a product sample, characterised by a container (20) of known cross-sectional shape along a vertical axis, a capacitance-type sensor means in the container comprising at least an earth electrode (32), a measuring electrode (30) and a reference electrode (34), and computing means for utilising output signals taken from said electrodes to compute the height of a product sample in the container independently of the dielectric constant of said sample.

6. Apparatus according to any of claims 1 to 4, characterised in that the device of claim 5 constitutes the said volume measuring means of claims 1 to 4.

7. Apparatus according to claim 5 or claim 6, characterised in that the computing means may act to calculate the height of the product sample in the container by use of an algebraic relationship given by the ratio of (ME-EE) to (RE-EE) where ME, EE and RE respectively represent the magnitudes of the output signals obtained from the measurement, earth and reference electrodes.

8. Apparatus according to claim 5 or claim 6 or claim 7, characterised in that the sensor means comprises a multiplicity of measurement, earth and reference electrodes extending in sequence around the entire internal periphery of the container, preferably a container of cylindrical shape with a multiplicity of electrodes distributed regularly around its circumference.

9. Apparatus according to claim 1, characterised by a container (20) of known configuration, means (22, 24) for feeding the product into the container to provide a product sample of initially unknown volume, capacitance-type sensor means for sensing the height of the product sample which has been fed into the container, a sample cell (10) having associated moisture content, temperature and weight sensors, means (26) for transferring the height-sensed volume of product sample from the container into the sample cell, and microprocessor means for computing at least the moisture content and bulk density of the product sample, utilising the outputs of the height sensor means at the container and the sensors associated with the sample cell.

10. Apparatus according to claim 9, characterised in that the means for feeding the product into the container (20) preferably comprises a valve controlled hopper (22) of internal volume smaller than that of the container.

*Fig. 1*

Fig.2

Fig.3